Europäisches Patentamt

European Patent Office

Office européen des brevets

(19)

(11) Veröffentlichungsnummer : **0 191 387**
**B1**

(12) EUROPÄISCHE PATENTSCHRIFT

(45) Veröffentlichungstag der Patentschrift :
07.09.88

(51) Int. Cl.⁴ : **G 11 B 23/04**

(21) Anmeldenummer : **86101319.1**

(22) Anmeldetag : **01.02.86**

(54) Frontklappenverriegelung von Magnetbandkassetten insbesondere Videobandkassetten.

(30) Priorität : 13.02.85 DE 3504965

(43) Veröffentlichungstag der Anmeldung :
20.08.86 Patentblatt 86/34

(45) Bekanntmachung des Hinweises auf die Patenterteilung : 07.09.88 Patentblatt 88/36

(84) Benannte Vertragsstaaten :
DE FR GB IT NL

(56) Entgegenhaltungen :
DE-A- 2 837 890
DE-A- 3 308 387
GB-A- 2 020 630
GB-A- 2 087 624
GB-A- 2 110 461

(73) Patentinhaber : Agfa-Gevaert AG
Patentabteilung
D-5090 Leverkusen 1 (DE)

(72) Erfinder : Pertzsch, Albert, Dipl.-Ing.
Leutstettener Strasse 29
D-8000 München 71 (DE)
Erfinder : Zeroni, Ludwig
Nelkenstrasse 40
D-8012 Ottobrunn (DE)
Erfinder : Brunner, Hubert
Mühlgasse 4a
D-8911 Weil (DE)

## Beschreibung

Die vorliegende Erfindung betrifft die Verriegelung einer schwenkbaren Frontklappe für Magnetbandkassetten, insbesondere Videobandkassetten.

Das Kassettengehäuse einer Videobandkassette, z.B. vom Typ VHS, ist mit einer schwenkbaren, vorderseitigen Frontklappe als Deckel versehen, welche das Magnetband bei nicht benutzter Kassette vor Verschmutzung schützt. Die Frontklappe öffnet sich beim Einsetzen der Kassette in den Videorecorder. Um den Öffnungs- und Verriegelungsmechanismus mit einer Vorspannung zu beaufschlagen, befindet sich auf der Innenseite der seitlich übergreifenden Frontklappe eine Achse, die einen Federwendel trägt und dessen langer Federschenkel an der Frontklappe anliegt, dies allerdings nur bei vormontierter Feder in der Frontklappe, sonst findet die Abstützung im Gehäuseoberteil statt. Durch eine Verriegelungsplatte wird gleichzeitig die Frontklappe im geschlossenen Zustand gehalten. Für den Verriegelungsmechanismus werden kleine, gewendelte Federn (DE-A-28 37 889) oder eine Blattfeder (DE-A-28 37 890), welche einerseits an der Verriegelungsplatte angreifen und sich andererseits an einer gehäusefesten Wand abstützen, benutzt. Die zwei Federkombinationen sind zwar funktionstechnisch einwandfrei, ihre Nachteile sind jedoch leicht zu erkennen, wie z. B. erhöhte Anzahl der Teile für den Verriegelungsmechanismus, aufwendige Prüfung, Montage, Zusammenbau, der in nacheinander folgenden Abschnitten erfolgt. In DE-A-33 28 299 und DE-U-81 21 098 ist jeweils eine angespritzte Kunststoff-feder für die Verriegelungsplatte beschrieben, die die Zahl der Teile — wie oben erwähnt — reduziert. In beiden Fällen ist die Kunststoffeder an die Verriegelungsplatte angespritzt, während das freie Ende der Feder an der Gehäusewand, die den Raum hinter der Verriegelungsplatte abschließt, anliegt. Da Drehpunkt und Kraftangriffspunkt relativ weit auseinander liegen, ist wegen der relativ großen Federauslenkung bei Öffnung der Verriegelungsplatte nach einer gewissen Zeit eine Materialermüdung zu erwarten, wenn bei der Bewegung der Feder der elastische Verformungsbereich verlassen wird. Zur Erreichung der notwendigen Federkräfte muß ein entsprechend dünner Materialquerschnitt für die Kunststoffeder gewählt werden, was aber auch die Spritzbarkeit beeinträchtigt.

In analoger Weise sind in der DE-A 28 20 866 eine Sperre und eine Feder beschrieben, die einige dieser oben erwähnten Nachteile des Mechanismus, der aus verschiedenen Sperrteilen und Federn besteht, überwinden. Diese Patentschrift beschreibt einen Schiebesperrmechanismus, mit dem die Verschlußklappe der Bandkassette in der geschlossenen Stellung gesperrt wird und der eine Feder umfaßt, die mit der Sperre aus einem Teil hergestellt ist und die die Sperre in Richtung auf die Sperrstellung bewegt. Dieser integrierte Sperrmechanismus der oben erwähnten Patentschrift hat jedoch den Nachteil, daß eine beträchtliche Kraftwirkung auf den Mechanismus notwendig ist, um die Sperre in ihre geöffnete oder ungesperrte Stellung zu bewegen. Ein anderer Nachteil dieses Sperrmechanismus ist, daß er besonders den sogenannten « Kriech »-Eigenschaften ausgesetzt ist, die bei Kunststoffteilen auftreten und dazu führen, daß sie nach einer bestimmten Zeitspanne eine bestimmte Form annehmen. Dies tritt besonders dann auf, wenn sie höheren Temperaturen ausgesetzt sind, beispielsweise in den Wiedergabemaschinen. Dieses « Kriech »-Verhalten der Feder, die dann eine Lage einnimmt, wie sie vorliegt in der geöffneten oder ungesperrten Stellung, verringert die Fähigkeit der Feder, die Sperre in die gesperrte Stellung zurückzuführen.

Aufgabe der Erfindung ist es, das Schließen der Frontklappe und deren Verriegelung mit einer Verriegelungsplatte ohne die geschilderten Nachteile zu erreichen, wobei die Maßnahme keinen Neubau eines gegebenenfalls vorhandenen Spritzwerkzeuges erfordern und auch eine vereinfachte Montierbarkeit mit sich bringen soll.

Erfindungsgemäß gelöst wurde die Aufgabe bei einer Verriegelungsplatte für Frontklappen, von Magnetbandkassetten, insbesondere Videobandkassetten, durch die Merkmale des Anspruchs 1.

Details der Erfindung sind Gegenstand von Unteransprüchen und der Beschreibung.

Der Öffnungs- und Schließmechanismus nach der Erfindung erfordert keine Änderung der Gehäuseteile, das Spritzteil für die Verriegelungsplatte braucht nur geringfügig geändert werden und die Montierbarkeit der Verriegelungsplatte wird wesentlich vereinfacht.

Die Erfindung wird nun anhand von Zeichnungen näher erläutert und zwar zeigt

Fig. 1 eine perspektivische Ansicht einer Videobandkassette mit Frontklappe, Verriegelungsplatte und den beiden Federn gemäß dem Stand der Technik,

Fig. 2 eine perspektivische Ansicht der Verriegelungsplatte mit der erfindungsgemäßen angespritzten Blattfeder

Fig. 3 eine Querschnittzeichnung nach Fig. 2.

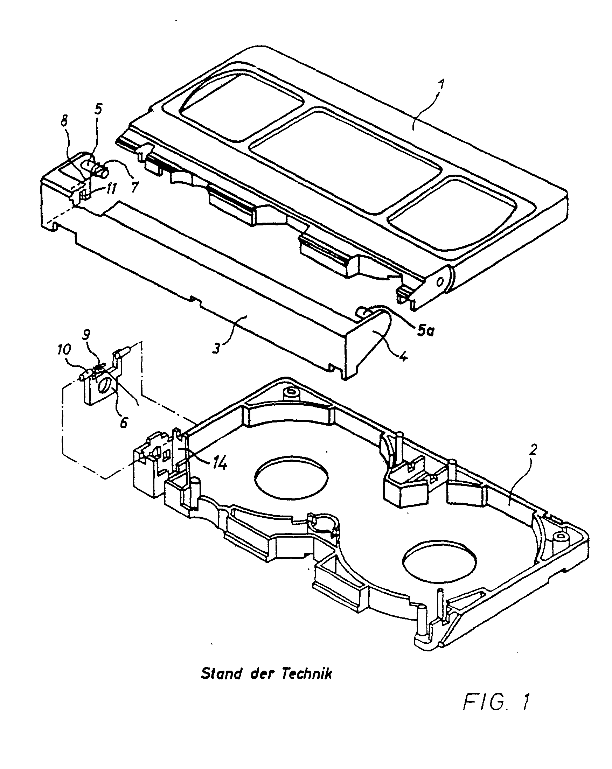

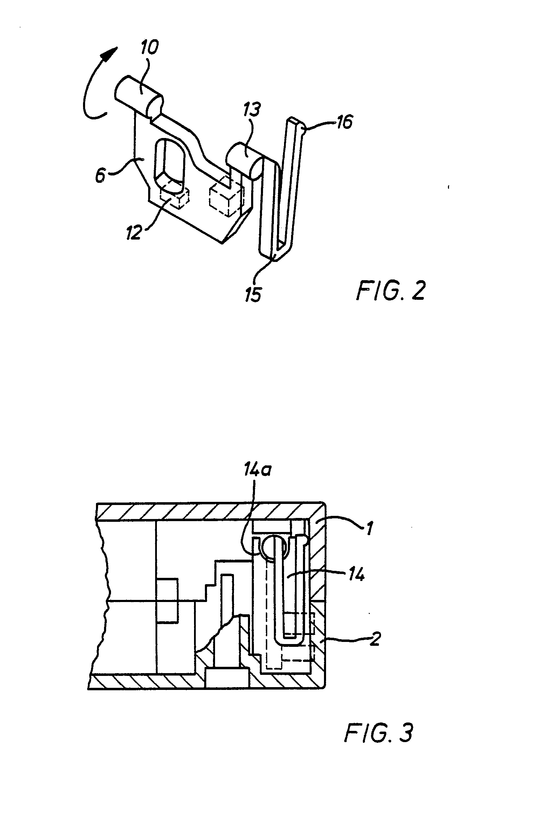

Fig. 1 zeigt eine handelsübliche Videobandkassette bestehend aus einer oberen und unteren Gehäusehälfte 1, 2, die beim Zusammenbau miteinander verschraubt werden. Das Magnetband wird von der Abwickelspule an der Vorderkante des Gehäuses vorbei geführt und auf die Aufwickelspule gewickelt (Band und Spule nicht dargestellt). Zum Schutz des Bandes vor Verschmutzung dient eine Frontklappe 3 mit Seitenwänden 4, auf deren Innenseiten Stifte 5, 5a angespritzt sind, um die die Frontklappe verschwenkt werden kann. In der unteren Gehäusehälfte ist eine schwenkbare Verriegelungsplatte 6 eingesetzt, welche zusammen mit einer in der Seitenwand 4 der Frontklappe befindlichen Vertiefung 11 wirksam ist. Die Feder 7 wird zuerst in der Frontklappe vorgespannt. Der Federwendel sitzt auf dem Stift 5 und der lange Federschenkel 8 greift unter die Frontklappe. Eine zweite Feder, die sogenannte Riegelfeder 9, sitzt mit ihrem Wendel auf einem Lagerzapfen 10 der Verriegelungsplatte, wobei der kurze Federschenkel an der Verriegelungsplatte anliegt und der lange Federschenkel sich an einen Steg in der unteren Gehäusehälfte abstützt. Mit Hilfe des in Fig. 2 dargestellten Vorsprunges 12 läßt sich die Verriegelungsplatte verschwenken und damit die Frontklappe entriegeln.

Erfindungsgemäß wird die Riegelfeder 9 durch eine an dem Lagerzapfen 13 angespritzte u-förmig gebogene Blattfeder 15 ersetzt, deren freies Ende 16 an der Gehäusewand anliegt. Beim Entriegeln wird die Verriegelungsplatte 6 in die in Fig. 2 eingezeichnete Richtung gedreht, wobei das freie Ende der Blattfeder ein Drehmoment in Richtung auf die Sperrstellung ausübt. Da der Lagerzapfen 13 auf der Vertiefung 14a der Innenwand (Fig. 3), welche einen Teil des Gehäuseunterteils 2 bildet, aufliegt, wird er horizontal so verlängert, daß die Blattfeder nicht an der Innenwand streift. Die Innenwand trennt also räumlich die Verriegelungsplatte von der Blattfeder.

Die Geometrie der erfindungsgemäßen Anwendung der Sperriegelplatte und der Blattfeder ist so ausgelegt, daß der Angriffspunkt der Blattfeder am Kassettengehäuse und der Drehpunkt der Sperriegelplatte so eng beieinander liegen, daß bei völliger Entriegelung die Blattfeder nur eine geringe Federauslenkung erfährt, so daß sie im elastischen Verformungsbereich bleibt und somit kaum einer Materialermüdung ausgesetzt ist. Aus diesem Grunde können auch größere Federquerschnitte realisiert werden, was die Spritzbarkeit wesentlich erleichtert.

Weil die typgemäße Riegelfeder 9 nicht mehr benötigt wird und die Verriegelungsplatte samt angespritzter Blattfeder einteilig ausgestattet ist, wird bei der Montage ein Teil weniger benötigt, was außerdem die Lagerhaltung und die Prüfkosten verringert. Die Blattfeder kann durch einfache Änderung des Werkzeuges an die Verriegelungsplatte angespritzt werden, jedenfalls ist kein Neubau des Werkzeugs zum Spritzen der Verriegelungsplatte erforderlich.

Das freie Ende 16 der Blattfeder kann, wie in Fig. 2 angedeutet, an der am Kassettengehäuse anliegenden Stelle höckerartig verdickt ausgestattet sein. Außerdem ist zur Erzielung einer genügenden Federspannung der freie Schenkel der Blattfeder so in der Länge bemessen, daß das freie Ende etwa in der Höhe des Lagerzapfen 13 sitzt, wodurch es am Gehäuseoberteil 1 anschlägt.

## Patentansprüche

1. Verriegelungsplatte für Frontklappen von Magnetbandkassetten, insbesondere Videobandkassetten, welche um Lagerzapfen (13) schwenkbar gelagert ist sowie eine an die Verriegelungsplatte angespritzt Blattfeder (15) enthält, welche ein Drehmoment in Richtung auf die Sperrstellung ausübt, dadurch gekennzeichnet, daß die Blattfeder (15) an dem zum Gehäuseteil (14) weisenden Lagerzapfen (13) der Verriegelungsklappe angespritzt und u-förmig ausgebildet ist, wobei ihr freies Ende (16) an der Innenseite der Außenwand des Kassettengehäuses (1) anschlägt.

2. Verriegelungsplatte nach Anspruch 1, dadurch gekennzeichnet, daß die Blattfeder aus dem gleichen Kunststoff wie die Verriegelungsplatte besteht.

3. Verriegelungsplatte nach Ansprüchen 1 und 2, dadurch gekennzeichnet, daß das an dem Kassettengehäuse anliegende freie Ende (16) der Blattfeder (15) zum Kassettengehäuse hin verdickt ausgebildet ist.

4. Verriegelungsplatte nach den Ansprüchen 1 bis 3, dadurch gekennzeichnet, daß der an der Gehäusewand anliegende Arm der Blattfeder (15) in seiner Länge so bemessen ist, daß das freie Ende (16) ungefähr in der Höhe des Lagerzapfen (13) sitzt.

## Claims

1. Locking plate for front flaps of magnetic tape cassettes, in particular videotape cassettes, which is mounted to swivel around the bearing neck (13) and contains a leaf spring (15) injected at the locking plate, which exerts a turning moment in the direction of the locking position, characterised in that the leaf spring (15) is injected at the bearing neck (13) of the locking flap pointing towards the part of the case (14) and designed in the shape of a U, wherein its free end (16) strikes against the inner side of the outer wall of the cassette case (1).

2. Locking plate according to claim 1, characterised in that the leaf spring consists of the same synthetic material as the locking plate.

3. Locking plate according to claims 1 and 2, characterised in that the free end (16) of the leaf spring (15) lying against the cassette case is designed to thicken in the direction of the cassette case.

4. Locking plate according to claims 1 to 3, characterised in that the arm of the leaf spring (15) lying against the wall of the case is calculated so that the free end (16) rests roughly at the height of the bearing neck (13).

## Revendications

1. Plaquette de verrouillage pour les volets frontaux de cassettes à bandes magnétiques, en particulier de cassettes à bandes vidéo, laquelle est montée de façon pivotante sur des tourillons (13) et comprend aussi un ressort à lame (15) venu de moulage avec la plaquette de verrouillage, lequel ressort à lame exerce un moment de rotation dans la direction de la position de blocage, caractérisée en ce que le ressort à lame (15) est moulé par injection et réalisé en forme de U sur le tourillon (13), tourné du côté d'une partie (14) du boîtier, de la plaquette de verrouillage, l'extrémité libre (16) de ce ressort à lame étant ainsi plaquée sur la face intérieure de la paroi extérieure du boîtier (1) de la cassette.

2. Plaquette de verrouillage selon la revendication 1, caractérisée en ce que le ressort à lame est constitué de la même matière plastique que la plaquette de verrouillage.

3. Plaquette de verrouillage selon les revendications 1 et 2, caractérisée en ce que l'extrémité libre (16) du ressort à lame (15) portant contre le boîtier de la cassette est réalisée de façon à présenter une sur-épaisseur en direction du boîtier de la cassette.

4. Plaquette de verrouillage selon les revendications 1 à 3, caractérisée en ce que la branche du ressort à lame (15) portant sur la paroi du boîtier est dimensionnée, en longueur, de façon que l'extrémité libre (16) se trouve approximativement à la hauteur du tourillon (13).

Stand der Technik

FIG. 1

FIG. 2

FIG. 3